# EUROPÄISCHE PATENTANMELDUNG

(11) **EP 0 849 110 A2**
(43) Veröffentlichungstag der Anmeldung: **24.06.1998**
(21) Anmeldenummer: 97118302.5
(22) Anmeldetag: 22.10.1997
(51) Int. Cl.: B60K 41/06

(54) **Verfahren und Vorrichtung zur Beeinflussung des Getriebe-eingangsmomentes**

(30) Priorität: 20.12.1996 DE 19653231
(71) Anmelder: ROBERT BOSCH GMBH, 70442 Stuttgart (DE)
(72) Erfinder: Grob, Ferdinand, 74354 Besigheim (DE); Bolz, Martin-Peter, 71720 Oberstenfeld (DE); Schwientek, Christian, 74189 Weinsberg (DE); Huelser, Holger, 70329 Stuttgart (DE)

(57) **Zusammenfassung**

Die Erfindung geht aus von einer Beeinflussung des Eingangsmomentes eines einer Brennkraftmaschine nachgelagerten Getriebes während eines Übersetzungsänderungsvorgangs des Getriebes. Hierbei wird das Eingangsmoment durch vorgebbare Maßnahmen abhängig von der vorliegenden Schaltart über den am Schaltanfang vorliegenden Wert erhöht oder erniedrigt. Der Kern der Erfindung besteht darin, daß als Maßnahme wenigstens eine Betätigung
- einer die geometrischen Eigenschaften des Abgastraktes der Brennkraftmaschine verändernde Vorrichtung (1012) und/oder
- einer das Getriebeeingangsmoment beeinflussenden elektromagnetischen Bremse (1021) und/oder
- der Zu- oder Abschaltung (Signal Na) von durch die Brennkraftmaschine angetriebenen Nebenaggregaten (107) und/oder
- der Ein- oder Auslaßventile der Brennkraftmaschine im Sinne einer Erzeugung eines negativen Verbrennungsmomentes (Signal E/A)
- einer Vorverstellung (Frühverstellung) des Zündzeitpunktes (α₂) im Falle einer fremdgezündeten Brennkraftmaschine
vorgegeben wird.

## Beschreibung

### Stand der Technik

Die Erfindung geht aus von einem Verfahren bzw. einer Vorrichtung mit den Merkmalen der Oberbegriffe der unabhängigen Ansprüche.

Solche Verfahren bzw.Vorrichtungen sind beispielsweise DE,A1,29 35 916 (entspricht der US 4,403,527). Hieraus ist bekannt, bei konventionellen Automatikgetrieben die Gangwechsel komfortabler zu gestalten, indem das Motormoment durch einen Motoreingriff während der Umschaltvorgänge modifiziert wird. Hierzu ist es bekannt, die Kraftstoffzufuhr zu verringern, den Zündzeitpunkt zu verzögern (Spätverstellung des Zündzeitpunktes), die Ladeleistung eines Kompressors oder Turboladers zu ändern oder eine vorbestimmte Anzahl von Ventilen des Antriebsmotors offen zu halten. Aus der DE,A1,43 09 903 ist ein Verfahren bzw. eine Einrichtung zur Steuerung des Abtriebsmoments eines Fahrzeugantriebs bekannt, wobei bei einem Gangwechsel des Getriebes das Motormoment derart beeinflußt wird, daß die Motordrehzahl von einem ersten auf einen zweiten Wert geregelt eingestellt wird. Dieser zweite Wert wird dabei von einem Sollwert des Abtriebsmoments und von der Abtriebsdrehzahl bestimmt. Das Motormoment wird hierbei insbesondere durch eine Einstellung der Drosselklappe und der Zündung beeinflußt.

Die Aufgabe der vorliegenden Erfindung besteht darin, Maßnahmen zur Beeinflussung des Eingangsmoments eines Getriebes darzustellen, um einen optimalen Gangwechsel zu erreichen.

Diese Aufgabe wird durch die kennzeichnenden Merkmale der unabhängigen Ansprüche gelöst.

### Vorteile der Erfindung

Wie erwähnt geht die Erfindung aus von einer Beeinflussung des Eingangsmomentes eines einer Brennkraftmaschine nachgelagerten Getriebes während eines Übersetzungsänderungsvorgangs des Getriebes. Hierbei wird das Eingangsmoment durch vorgebbare Maßnahmen abhängig von der vorliegenden Schaltart über den am Schaltanfang vorliegenden Wert erhöht oder erniedrigt. Der Kern der Erfindung besteht darin, daß als Maßnahme wenigstens eine Betätigung
- einer die geometrischen Eigenschaften des Abgastraktes der Brennkraftmaschine verändernde Vorrichtung und/oder
- einer das Getriebeeingangsmoment beeinflussenden elektromagnetischen Bremse und/oder
- der Zu- oder Abschaltung von durch die Brennkraftmaschine angetriebenen Nebenaggregaten und/oder
- der Ein- oder Auslaßventile der Brennkraftmaschine im Sinne einer Erzeugung eines negativen Verbrennungsmomentes
- einer Vorverstellung (Frühverstellung) des Zündzeitpunktes im Falle einer fremdgezündeten Brennkraftmaschine
vorgegeben wird.

Durch die erfindungsgemäßen Maßnahmen kann eine schnelle, aktive Einstellung der Getriebeeingangsdrehzahl auf die Synchrondrehzahl des neuen Getriebegangs erreicht werden. Neben den konventionellen Automatikgetrieben ist die aktive Einstellung der Synchrondrehzahl des neuen Gangs insbesondere bei sogenannten automatisierten Handschaltgetrieben erforderlich.

In einer vorteilhaften Ausgestaltung der Erfindung ist vorgesehen, daß durch die Betätigung der Vorrichtung, die die geometrischen Eigenschaften des Abgastraktes der Brennkraftmaschine verändert, der durch das Abgas der Brennkraftmaschine bedingte Druck verändert wird. Hierbei ist insbesondere an eine Klappe im Abgastrakt der Brennkraftmaschine gedacht. Eine solche zuschaltbare Klappe im Abgastrakt, wie sie bei Nutzkraftfahrzeugen zur Erhöhung des Motorschleppmoments üblich ist, kann auch bei einem Benzinmotor durch einen erhöhten Abgasgegendruck den Motor schneller abbremsen. Durch die erfindungsgemäße Änderung der Druckverhältnisse im Abgastrakt der Brennkraftmaschine kann somit eine schnelle Erniedrigung der Getriebeeingangsdrehzahl erreicht werden.

In einer weiteren vorteilhaften Ausgestaltung der Erfindung ist vorgesehen, daß als elektromagnetische Bremse, die das Getriebeeingangsmoment beeinflußt, eine an sich bekannte Wirbelstrombremse Verwendung findet. Insbesondere ist erfindungsgemäß vorgesehen, daß die elektromagnetische Bremse mit der Schwungscheibe der Brennkraftmaschine oder mit einer zwischen der Brennkraftmaschine und dem Getriebe angeordneten Kupplung verbunden ist. In dieser Ausgestaltung wird die Schwungscheibe des Motors oder die motorseitige Kupplungsscheibe als Wirbelstrombremse genutzt. Zur Unterstützung einer Hochschaltung kann dann das bremsende Magnetfeld eingeschaltet werden, wodurch der Motor abgebremst wird bzw. die Getriebeeingangsdrehzahl erniedrigt wird.

Eine weitere Ausgestaltung der Erfindung sieht vor, daß als Nebenaggregate ein Generator und/oder ein Kompressor für eine Klimaanlage zu- oder abgeschaltet wird. Zur Erniedrigung des Getriebeeingangsmomentes bzw. der Getriebeeingangsdrehzahl können solche zuschaltbaren Nebenaggregate eingeschaltet werden, was ein zusätzliches Verlustmoment bewirkt. Der gegenteilige Effekt, also eine schnelle Erhöhung der Getriebeeingangsdrehzahl, kann durch ein gezieltes Ausschalten der eingeschalteten Nebenaggregate und damit durch eine Reduktion des durch die Nebenaggregate am Motor bewirkten Verlustmomentes wahrend eines Gangwechsels erzielt werden.

Eine besonders wirkungsvolle Möglichkeit, die Getriebeeingangsdrehzahl aktiv und schnell einzustellen, besteht in der Manipulation der Ein- oder Auslaßventile der Brennkraftmaschine im Sinne einer Erzeugung eines negativen Verbrennungsmomentes. Hierbei wird davon ausgegangen, daß die Brennkraftmaschine als Viertaktmotor mit einem Ansaugtakt, einem Verdichtungstakt, einem Arbeitstakt und einem Ausstoßtakt ausgelegt ist. Zur schnellen und wirkungsvollen Erniedrigung des Motormomentes bzw. des Getriebeeingangsmomentes und damit zur effizienten Einstellung der Getriebeeingangsdrehzahl kann die Ansteuerung der Ein- oder Auslaßventile im Normalbetrieb (außerhalb eines Gangwechsels) wahrend wie folgt verändert werden:
Es kann wenigstens ein Auslaßventil während des Verdichtungstaktes geöffnet werden, wobei vorzugsweise das Einlaßventil oder die Einlaßventile während des Ansaugtaktes geschlossen sind.
Es kann wenigstens ein Auslaßventil während des Arbeitstaktes geöffnet werden.
Das Auslaßventil oder die Auslaßventile können während des Ausstoßtaktes geschlossen werden.
Das Einlaßventil oder die Einlaßventile können während des Ansaug- und/oder Arbeitstaktes bis kurz vor Erreichen des unteres Totpunktes geschlossen werden, wobei wenigstens ein Auslaßventil kurz vor Erreichen des unteren Totpunktes geöffnet wird.
Das Einlaßventil oder die Einlaßventile können während des Verdichtungs- und/oder Ausstoßtaktes bis kurz vor Erreichen des oberen Totpunktes geschlossen werden, wobei wenigstens ein Auslaßventil kurz vor Erreichen des oberen Totpunktes geöffnet wird.
Wenigstens ein Auslaßventil kann während des Arbeitstaktes geöffnet werden, wobei der während des Verdichtungstaktes stattfindende Zündzeitpunkt im Sinne einer im Vergleich mit dem Normalbetrieb extremen Frühverstellung wesentlich vor Erreichen des oberen Totpunktes eingestellt wird.

Weitere vorteilhafte Ausgestaltungen sind den Unteransprüchen zu entnehmen.

### Zeichnung

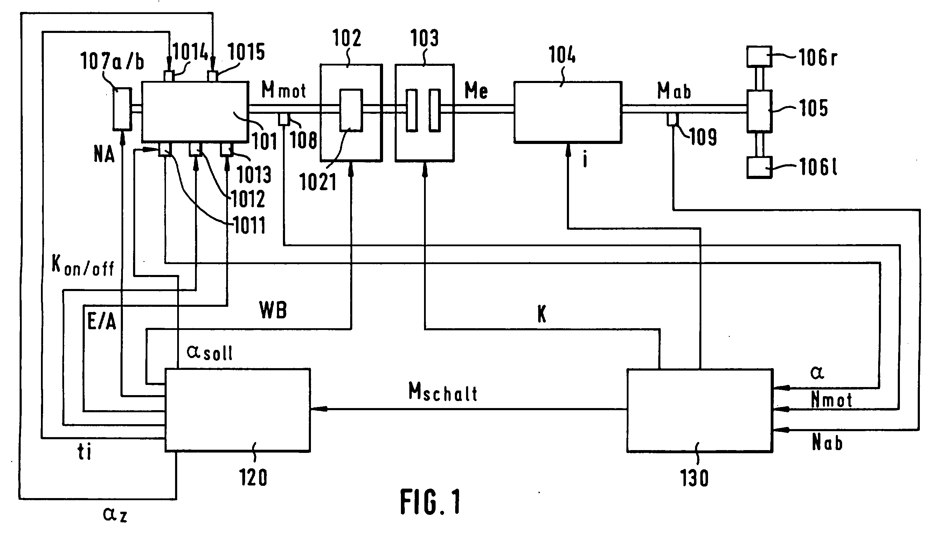

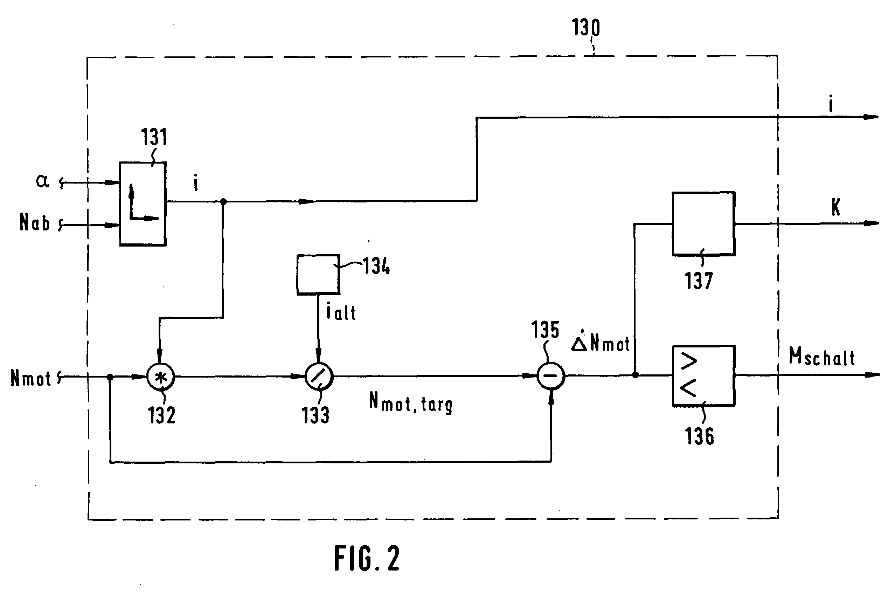

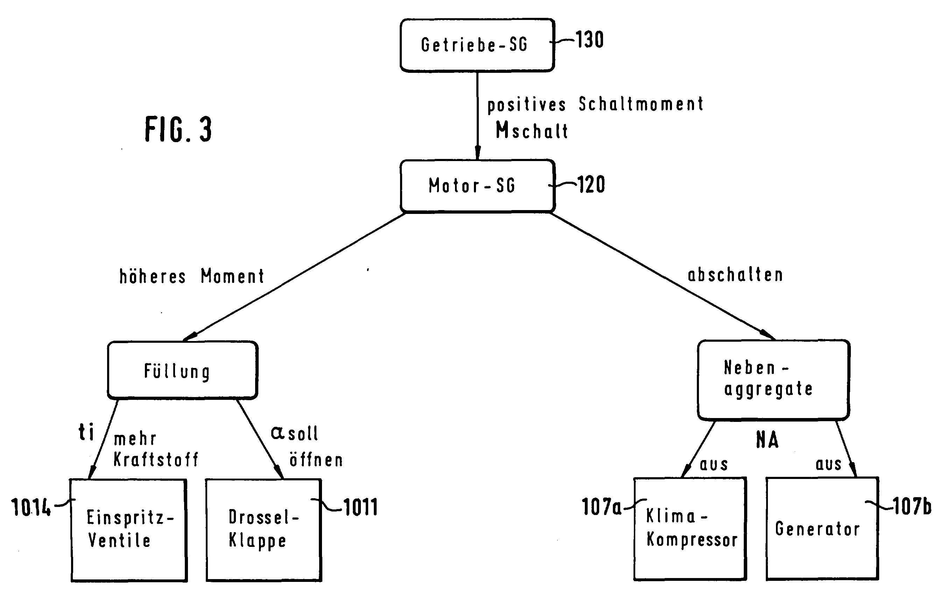

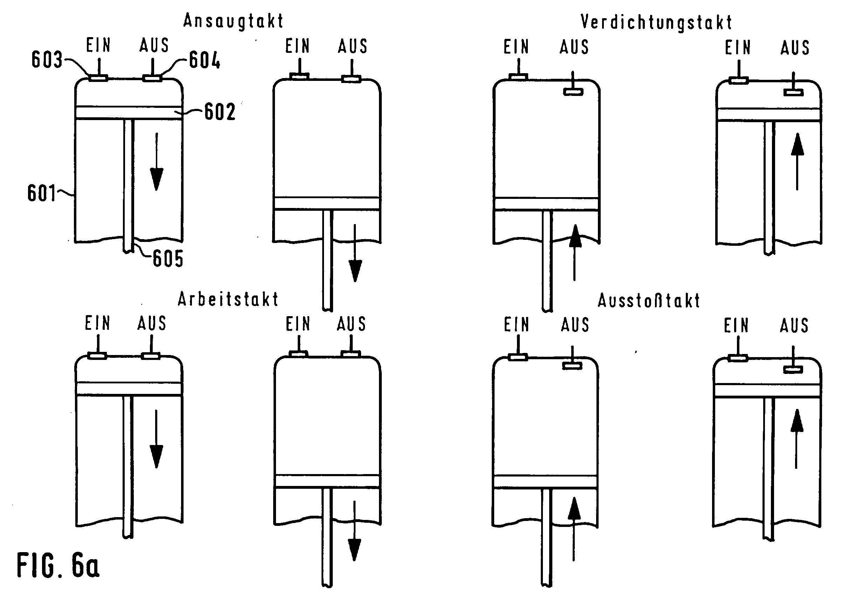

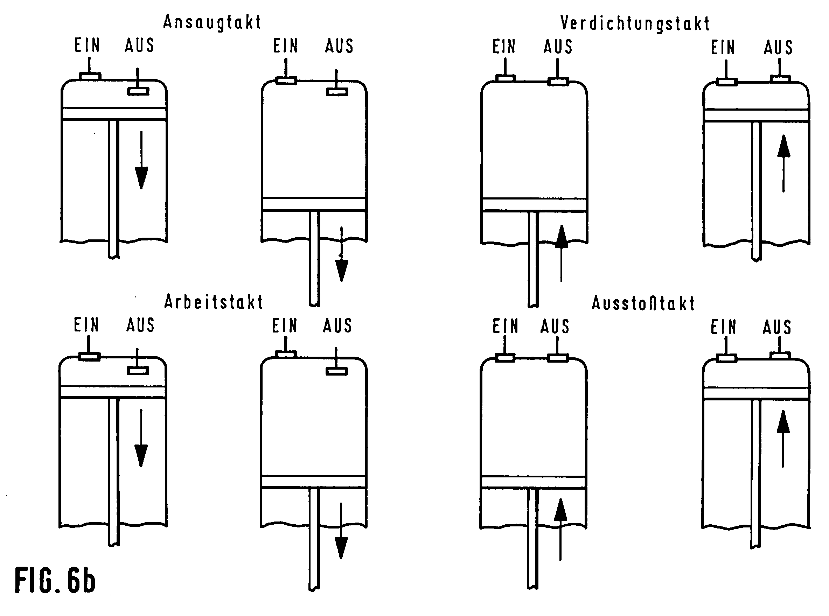

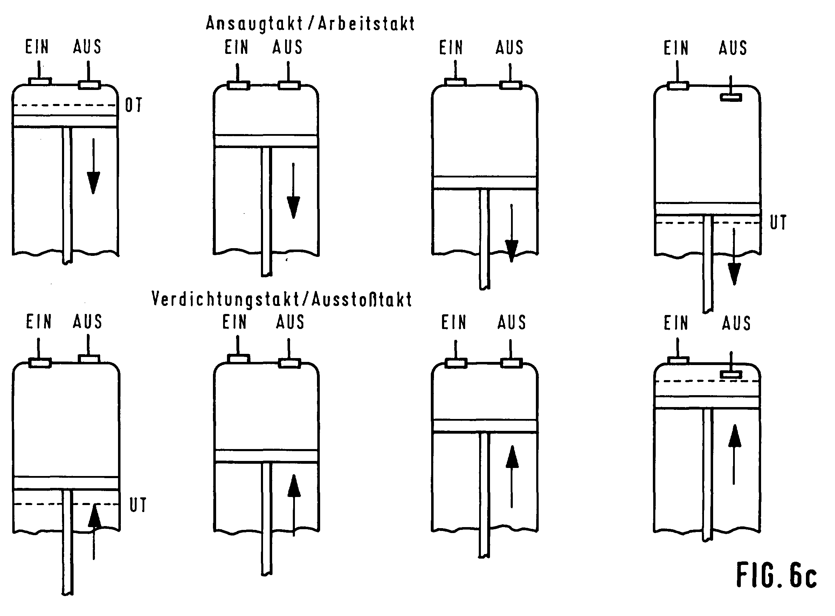

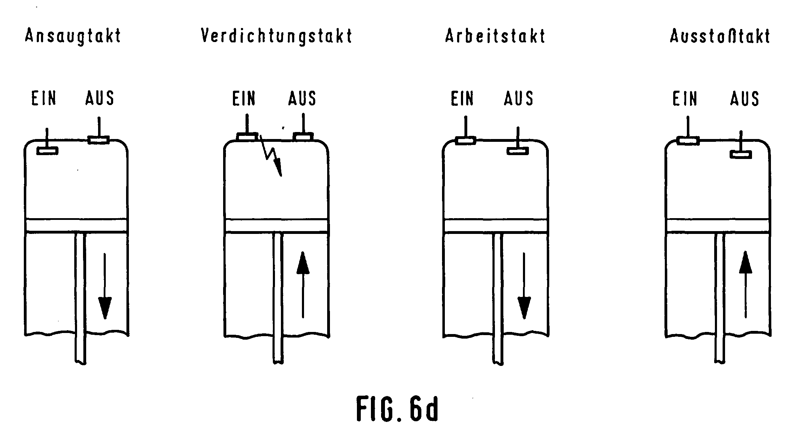

Die Figuren 1 und 2 zeigen die Erfindung anhand eines Blockschaltbildes. Die Figuren 3, 4 und 5 stellen die Funktionsweise der Blöcke anhand von Diagrammen dar. Die Figuren 6a, 6b, 6c und 6d zeigen verschiedene Möglichkeiten, die Ein- bzw. Auslaßventile der Brennkraftmaschine zu steuern.

### Ausführungsbeispiele

Die Erfindung soll im folgenden anhand von Ausführungsbeispielen detailliert beschrieben werden. Die Figur 1 zeigt mit dem Bezugszeichen 101 eine Brennkraftmaschine mit Nebenaggregaten 107a/b, deren Ausgangsmoment Mmot (abzüglich der Verlustleistungen durch die Nebenaggregate 107a/b) über die Schwungscheibe 1021 der Kupplung 103 zugeführt wird. Die Kupplung 103 kann durch entsprechende Ansteuerung das Motorausgangsmoment als Getriebeeingangsmoment dem Getriebe 104 zuführen. Das Getriebeausgangsmoment Mab wird über das Ausgleichsgetriebe 105 an die Räder 106r/l weitergeleitet.

Das Getriebe 104 ist als konventionelles Automatikgetriebe oder als automatisiertes Handschaltgetriebe ausgelegt, wobei das vom Getriebesteuergerät 130 kommende Signal i einen Gangwechsel initiiert. Die Kupplung 103 wird durch Ansteuerung des Getriebesteuergerätes 130 mittels des Signals K betätigt. Zur Bestimmung des Gangwechsels bzw. der Kupplungsbetätigung wird dem Getriebesteuergerät 130 die Getriebeabtriebsdrehzahl Nab (Drehzahlsensor 109), die Motordrehzahl Nmot (Drehzahlsensor 108) und die Motorlast α (Drosselklappenstellungswinkelgeber 1011) zugeführt. Das Getriebesteuergerät 130 wird anhand der Figur 2 näher dargestellt. Erfindungswesentlich ist in der Figur 1, daß das Getriebesteuergerät 130 ein Schaltmoment Mschalt an das Motorsteuergerät 120 abgibt. Dieses Schaltmoment Mschalt wird im Motorsteuergerät 120 durch verschiedene erfindungsgemäße Maßnahmen eingestellt.

Zur Einstellung des Schaltmoments kann eine Verstellung des Zündwinkels 1014 mittels des Signals α_{z} geschehen. Weiterhin kann mittels des Signals ti die Kraftstoffmenge variiert werden oder durch das Signal NA können die durch den Motor 101 angetriebenen Nebenaggregate 107a/b zu- bzw. abgeschaltet werden. Mit dem Bezugszeichen 1012 ist eine Klappe im Abgastrakt der Brennkraftmaschine 101 symbolisiert, die durch das Signal K_{on/off} betätigt werden kann. Die Modifikation der Steuerung der Ein- und Auslaßventile des Motors 101 kann durch das Signal E/A geschehen. Die Wirbelstrombremse 102, die in diesem Ausführungsbeispiel auf die Schwungscheibe 1021 des Motors 101 wirkt, kann durch das Signal WB ein- bzw. ausgeschaltet werden. Schließlich ist eine Betätigung (Signal αₛₒₗₗ) der Drosselklappe 1011 zur Einstellung des Schaltmoments Mschalt vorgesehen.

Die Erfindung betrifft Maßnahmen, mit denen der Schaltvorgang bei diskret schaltenden Automatikgetrieben 104 (konventionelle Stufenautomatik oder automatisiertes Schaltgetriebe) unterstützt werden kann. Hierzu wird der Motor über eine Momentenanforderung, das Schaltmoment Mschalt, gesteuert. Wenn die Getriebesteuerung 130 eine Schaltung anfordert (Schaltsignal i), ist diese Schaltung besonders komfortabel, schnell und schonend durchzuführen, wenn am Ende des Schaltvorgangs die Getriebeeingangsdrehzahl möglichst gut mit der Synchrondrehzahl des eingelegten Gangs übereinstimmt. Bei konventionellen diskret schaltenden Automatikgetrieben kann durch die Überschneidung der mit Druck beaufschlagten Bremsen und Kupplungen im Getriebe eine neue Übersetzung eingestellt und der Motor passiv auf die dann benötigte Synchrondrehzahl gebracht werden. Ggf. wird diese Angleichung der Drehzahlen noch durch den Schlupf an einem hydrodynamischen Wandler (in der Figur 1 nicht dargestellt) vereinfacht. Insbesondere bei Fahrzeugen mit automatisierten Schaltgetriebe und mit einer Reibkupplung statt eines hydrodynamischen Wandlers dauert die Angleichung der Drehzahlen jedoch lange, was eine lange Unterbrechung der Zugkraft und damit einen verminderten Schaltkomfort zur Folge hat.

Den erfindungsgemäßen Maßnahmen, die im folgenden anhand von Ausführungsbeispielen dargestellt werden, liegt der Gedanke zugrunde, die am Ende des Schaltvorgangs vorliegende Getriebeeingangsdrehzahl bzw. die Motordrehzahl aktiv statt passiv einzustellen. Hierdurch kann die gewünschte Getriebeeingangsdrehzahl in kürzerer Zeit eingestellt werden. Die Getriebeumschaltungen können dadurch schneller, schonender und komfortabler durchgeführt werden.

Wie in der Figur 2 dargestellt, wird der Getriebesteuerung 130 die Motorlast α (Drosselklappenstellung), die Getriebeabtriebsdrehzahl Nab (Fahrzeuggeschwindigkeit) und die aktuelle Motordrehzahl Nmot zugeführt. Im Block 131 wird in an sich bekannter Weise aus der Motorlast und der Getriebeabtriebsdrehzahl mittels eines oder mehrerer Kennfelder die jeweils einzustellende Getriebeübersetzung i ermittelt. Diese wird dem Getriebe 104 zugeführt. Aus der aktuellen Motordrehzahl Nmot und der Übersetzungsabstufung von Ist- und Sollübersetzung iₐₗₜ und i wird mittels der Verknüpfungen 132 und 133 eine Zieldrehzahl N_{mot,targ} ermittelt, mit der sich der Motor nach der erfolgten Schaltung drehen soll. Die momentan eingestellte Getriebeübersetzung ist dabei mit dem Block 134 (Speicher) gekennzeichnet. In einem weiteren Schritt wird aus der Differenz (Verknüpfung 135) von Ist- und Zieldrehzahl des Motors bestimmt, ob der Motor durch ein positives Drehmoment beschleunigt oder durch ein erhöhtes negatives Drehmoment abgebremst werden soll (Komparator 136). Gleichzeitig kann abhängig von dem Differenzwert ΔNmot mittels des Blocks 137 die Kupplung 103 durch das Signal K angesteuert werden. Im Falle einer Hochschaltung (beispielsweise vom ersten in den zweiten Getriebegang) benötigt man ein negatives Drehmoment, im Falle einer Rückschaltung ein positives Drehmoment. Dieses Drehmoment wird im folgenden Schaltmoment Mschalt genannt. Solange im Block 136 festgestellt wird, daß die Drehzahldifferenz ΔNmot vom Betrag her größer als ein Schwellwert ist, wird von dem Motor bzw. der Motorsteuerung 120 das Schaltmoment Nschalt gefordert, ansonsten greift die Schaltung nicht in die Momentenforderung des Motors ein. Die Angleichung der aktuellen Motordrehzahl Nmot an die Zieldrehzahl N_{mot,targ} kann dabei sowohl gesteuert als auch geregelt erfolgen. Bei einer gesteuerten Angleichung wird aus der Drehzahldifferenz und den Trägheitsmomenten ein Schaltmoment und die Zeitdauer, über die das Schaltmoment wirken soll, berechnet. Bei einer geregelten Angleichung wird solange ein festes Schaltmoment Mschalt gefordert, wie die Abweichung der Drehzahl noch zu groß ist. Ist die Abweichung geringer, wird evtl. auf eine Regelstrategie umgeschaltet.

Im folgenden werden anhand der Figuren 3 bis 6 Maßnahmen beschrieben, wie solche positiven oder negativen Schaltmomentenforderungen Mschalt zur schnelleren Einstellung einer gewünschten Drehzahl N_{mot,targ} bei einer Getriebeumschaltung realisiert werden können.

Die Figur 3 zeigt dabei eine Rückschaltung, bei der das Getriebesteuergerät 130 an das Motorsteuergerät eine positive Momentenforderung Mschalt leitet. In Reaktion auf die positive Momentenanforderung kann zur schnelleren Drehzahlerhöhung dem Motor 101 eine bestimmte Kraftstoffmenge zugeteilt werden, die das geforderte Moment erzeugt. Hierzu werden die Einspritzventile 1014 durch das Signal ti länger als im Normalbetrieb (außerhalb von Schaltvorgängen) geöffnet, wodurch mehr Kraftstoff zur Verbrennung gelangt. Zur schnelleren Drehzahlerhöhung kann weiterhin aktiv die Drosselklappe 1011 durch das Signal αₛₒₗₗ geöffnet werden. Die Öffnung der Drosselklappe geschieht dabei im allgemeinen bis zu einer Grenze, die vom Fahrerwunsch abhängt. Alternativ oder darüberhinaus kann ein positives Schaltmoment Mschalt dadurch erreicht werden, daß alle oder bestimmte Nebenaggregate 107a/b durch das Ansteuersignal NA ausgeschaltet werden. Hierbei ist insbesondere an einen Klimakompressor 107a und/oder einen Stromgenerator 107b gedacht. Um die Wirkung der Abschaltung der Nebenaggregate optimal auszunutzen, kann vorgesehen sein, daß die Nebenaggregate schon kurze Zeit vor Beginn des eigentlichen Schaltvorgangs abgeschaltet werden.

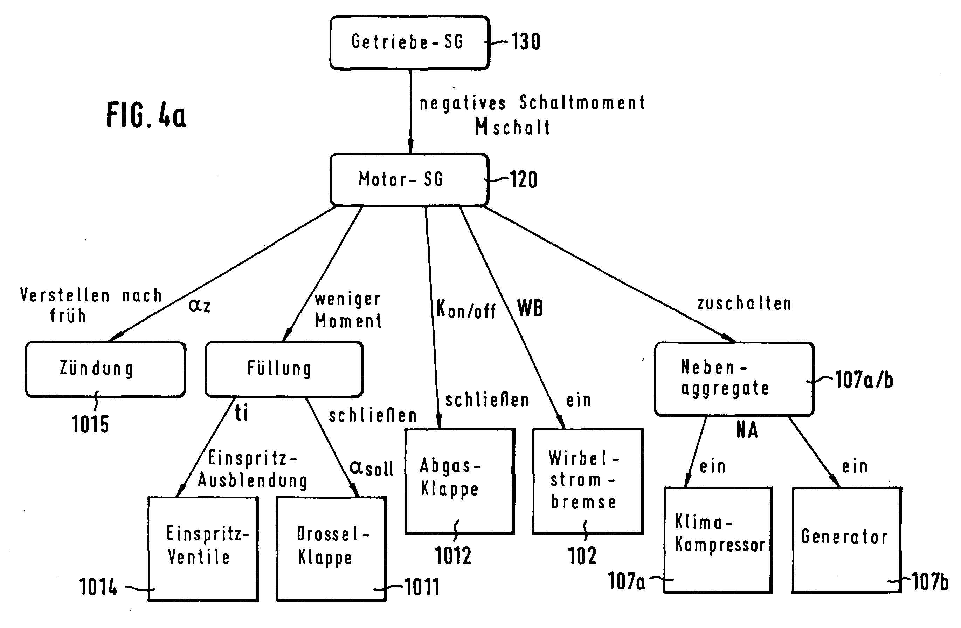

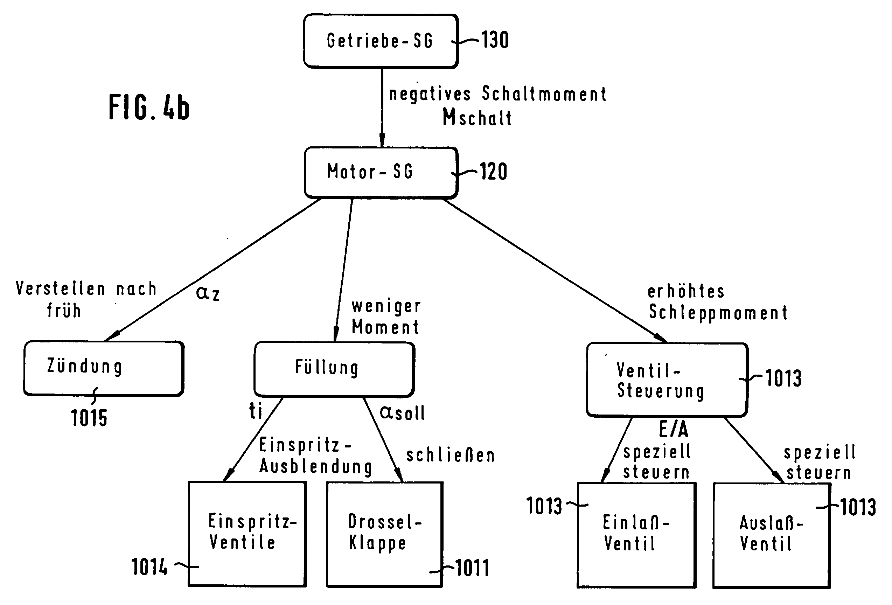

Bei Hochschaltvorgängen mit negativer Momentenforderung Mschalt können verschiedene Methoden angewandt werden, die Motordrehzahl schnell zu reduzieren (Figuren 4 bis 6):
1. Bei einem Otto-Motor mit elektronischer Wahl des Zündwinkels und variabler Steuerung des Auslaßventils kann der Zündwinkel so früh gewählt werden, daß der Zylinderkolben bei der Aufwärtsbewegung durch den Gegendruck der Verbrennungsgase abgebremst wird. Hierbei muß dem Motor eine geeignete Menge zündfähigen Gemisches zugeteilt werden, die das geforderte negative Schaltmoment erzeugt, ohne daß es zum Klopfen kommt. Danach muß das Auslaßventil im Ausstoßtakt geöffnet werden.
2. Bei einem Motor mit vollvariabler Steuerung von Ein- und Auslaßventilen kann durch Kompression bzw. Dekompression des Zylindervolumens ein erhöhtes negatives Drehmoment erzeugt werden. Wird hierzu die Kompression benutzt, müssen bei jeder Abwärtsbewegung des Kolbens im Zylinder Ein- und/oder Auslaßventile geöffnet werden. Bei der Aufwärtsbewegung müssen alle Ventile geschlossen sein, um eine hohe Kompression zu erzeugen. Erreicht der Kolben wieder den oberen Totpunkt, werden Ein- und/oder Auslaßventile geöffnet, um die Kompressionsarbeit in Wärme zu verwandeln. Wird hingegen die Dekompression zur Erzeugung eines erhöhten negativen Motormomentes verwendet, müssen analog bei jeder Abwärtsbewegung des Kolbens die Ein- und/oder Auslaßventile geschlossen werden, um einen Unterdruck zu erzeugen. Erreicht der Kolben nun den unteren Totpunkt, werden die Ein- und/oder Auslaßventile geöffnet, um durch einströmende Luft und/oder Abgas den Unterdruck auszugleichen und so die Dekompressionsarbeit in Wärme zu verwandeln. Hier sind auch Mischformen aus beiden Betriebsarten möglich. Zur genaueren Darstellung dieser Sachverhalte sei auf die Beschreibung der Figur 6 verwiesen. Im Gegensatz zur herkömmlichen Ventilsteuerung kann bei einer vollvariablen Ventilsteuerung bei jeder Umdrehung des Motors zusätzliches negatives Drehmoment erzeugt und nicht nur bei jeder zweiten.
3. Bei einem Otto-Motor mit Direkteinspritzung des Kraftstoffs kann die Methode 1 (Verstellung des Zündwinkels) besonders wirkungsvoll eingesetzt werden, da in diesem Fall kein Kraftstoff im Wandfilm gebunden ist, der den Aufbau eines negativen Moments durch Frühzündung verzögert oder der unverbrannt ins Abgas gelangen kann.
4. Ein zusätzliches negatives Moment kann, wie erwähnt, durch die Zuschaltung zuschaltbarer Nebenaggregate wie z. B. der Lichtmaschine oder Klimakompressor erzeugt werden. Um die Bremswirkung solcher Aggregate optimal auszunutzen, müssen sie ggf. schon eine kurze vor den Beginn des eigentlichen Schaltvorgangs zugeschaltet werden.
5. Eine zuschaltbare Klappe im Abgastrakt, wie bei Nutzkraftfahrzeugen üblich, kann durch einen erhöhten Abgasgegendruck den Motor schneller abbremsen.
6. Durch eine Wirbelstrombremse an der Schwungscheibe oder an der motorseitigen Kupplungsscheibe kann der Motor ebenfalls schneller abgebremst werden.
7. Durch Ausblenden von Einspritzimpulsen kann sowohl bei einem Otto-Motor als auch bei einem Diesel-Motor dafür gesorgt werden, daß zumindestens kein positives Drehmoment entsteht.

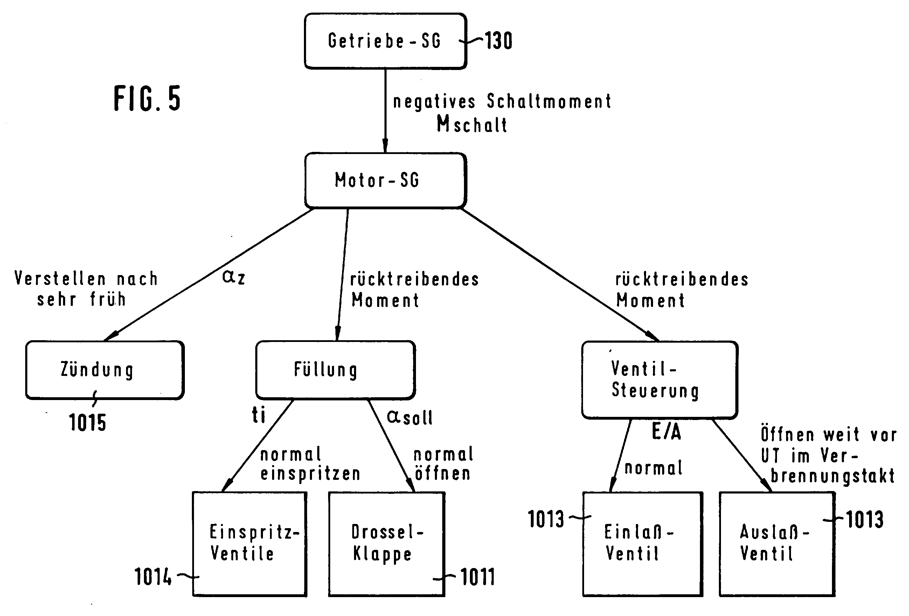

Die Figuren 4a, 4b und 5 zeigen schematisch verschiedene Möglichkeiten, wie ein negatives Schaltmoment Mschalt realisiert werden kann.

Die Figur 4a zeigt dabei Möglichkeiten, ein negatives Schaltmoment Mschalt bei Hochschaltvorgängen ohne eine Ventilsteuerung zu erlangen. Fordert das Getriebesteuergerät 130 vom Motorsteuergerät 120 eine Untersützung Mschalt einer Hochschaltung an, so kann die Zündung 1015 durch das Signal α_{z} nach früh verstellt werden. Zusätzlich kann über eine verminderte Füllung das vom Motor abgegebene Drehmoment reduziert werden. Hierzu kann die Einspritzmenge reduziert werden (Signale ti, Einspritzventile 1014). Hierzu kann die Einspritzung einzelner Zylinder zeitweise vollständig ausgeblendet werden. Zusätzlich zur Reduzierung der Kraftstoffmenge kann die Motorfüllung derart vermindert werden, daß die Drosselklappe über einen entsprechenden an sich bekannten Drosselklappensteller 1011 durch das Signal αₛₒₗₗ wenigstens teilweise geschlossen wird. Weiterhin können, wie schon erwähnt, zuschaltbare Nebenaggregate wie Klimakompressor oder Stromgenerator eingeschaltet werden (Nebenaggregate 107a/b, Ansteuersignale NA), was ein zusätzliches Verlustmoment bewirkt.

Wie in der Figur 4a zu sehen ist, ist im Abgastrakt des Motors 101 eine Klappe 1012 zur Erhöhung des Gegendrucks des Motors vorgesehen. Der erhöhte Gegendruck, der in Reaktion auf ein Schließen einer solchen Abgasklappe (Ansteuersignal K_{on/off}) erreicht wird, bremst den Motor wirkungsvoll ab. Zur Unterstützung einer Hochschaltung kann also eine solche Abgasklappe 1012 geschlossen werden.

Weiterhin besteht die Möglichkeit, die Schwungscheibe 1021 des Motors 101 oder die motorseitige Kupplungsscheibe als Wirbelstrombremse 102 zu nutzen. Zur Unterstützung eines Hochschaltvorgangs kann dann das bremsende Magnetfeld eingeschaltet werden (Ansteuersignal WB), wodurch der Motor abgebremst wird.

Die o. g. Möglichkeiten zur Realisierung des Schaltmomentes können jeweils unabhängig voneinander oder in Kombination eingesetzt werden.

Die Figur 4b zeigt, wie bei einer variablen Ventilverstellung 1013 (Ansteuersignal E/A) zusätzlich zu den in der Figur 4a gezeigten Möglichkeiten ein noch höheres negatives Schaltmoment Mschalt erzeugt werden kann. Die Einzelheiten zur speziellen Ansteuerung der Ein- bzw. Auslaßventile zeigen die Figuren 6a, 6b und 6c. Hervorzuheben ist dabei, daß jede Abweichung der im Normalbetrieb (außerhalb von Schaltvorgängen) stattfindenden Ventilsteuerung in Richtung der in den Figuren 6a, 6b und 6c gezeigen Weise ein erhöhtes Schleppmoment erzeugt.

Die Figur 5 illustriert die stärkste Möglichkeit zur Erzeugung eines negativen Schaltmoments Mschalt bei Otto-Motoren. Neben den schon beschriebenen Eingriffen auf die Zündung und auf die Füllung wird hier ein aktiv rücktreibendes Drehmoment durch Verbrennung von Kraftstoff erzeugt, das den Motor besonders schnell abbremst. Die Einzelheiten hierzu zeigt die Figur 6d. Auch hier können noch zusätzlich die weiteren in den vorhergehenden Figuren gezeigten Figuren für ein negativen Schaltmoment eingesetzt werden.

Die Figuren 6a-d zeigen jeweils schematisch einen Zylinder 601 des Motors 101 mit dem Kolben 602 und der Kolbenstange 605. Die Füllung wird den Zylinder durch das Einlaßventil 603 zugeführt, das Auslaßventil 604 steht mit dem Abgastrakt in Verbindung. In den Figuren 6a-d wird von einem normalen Viertaktmotor ausgegangen, bei dem im Normalbetrieb in einem Ansaugtakt durch Öffnen des Einlaßventiles 603 ein Kraftstoff-Luft-Gemisch angesaugt wird. Das Auslaßventil 604 ist dabei überwiegend geschlossen. Im Verdichtungstakt wird das Kraftstoff-Luft-Gemisch bei geschlossenen Ein- und Auslaßventilen komprimiert, woraufhin im Arbeitstakt bei geschlossenen Ein- und Auslaßventilen durch die Verbrennung des Kraftstoff-Luft-Gemisches der Kolben 602 nach unten bewegt wird. Im Ausstoßtakt wird durch eine Öffnung des Auslaßventiles 604 das Abgas in den Abgastrakt ausgestoßen. Bei dieser Darstellung wurde bewußt auf die bekannten Ventilüberschneidungssteuerungen verzichtet. Weiterhin ist in den Figuren 6a-d nur jeweil ein Einlaßventil und ein Auslaßventil dargestellt. Es können selbstverständlich mehrere Einlaßventile und/oder mehrere Auslaßventile vorgesehen sein. Weiterhin stellen die anhand der Figuren 6a-d dargestellten Ventilansteuerungen nur die erfindungsgemäße Idee schematisch dar. Auch hierbei können, ohne den erfinderischen Gedanken zu verlassen, Ventilüberschneidungen stattfinden oder ein vorzeitiges Öffnen bzw. Schließen der Ventile getätigt werden.

Die Figur 6a zeigt, wie bei einer variablen Ventilsteuerung ein erhöhtes Schleppmoment durch Dekompression erzeugt werden kann. Im Ansaugtakt bleiben Ein- und Auslaßventil 603 und 604 geschlossen, wodurch ein hoher Unterdruck im Zylinder 601 entsteht. Dieser Unterdruck erzeugt ein rücktreibendes Drehmoment an der Kurbelwelle. Im Verdichtungstakt wird nun das Auslaßventil 604 geöffnet, wodurch Abgas in den Zylinder 601 einströmt und den Unterdruck ausgleicht. Auf diese Weise entsteht bei einer Aufwärtsbewegung des Kolbens 602 im Zylinder 601 kein vortreibendes Drehmoment. Rechtzeitig vor Erreichen des oberen Totpunktes OT des Kolbens 602 muß das Auslaßventil 604 geschlossen werden, um eine Berührung durch den Kolben und damit eine Beschädigung zu vermeiden. Im Arbeits- und Ausstoßtakt wiederholt sich der gleiche Vorgang, wodurch bei jeder Umdrehung der Kurbelwelle ein negatives Momentenintegral entsteht.

Das anhand der Figur 6a beschriebene Verfahren ist unabhängig von der Zahl der Ein- und Auslaßventile. Zudem funktioniert das Verfahren in der gleichen Weise, wenn statt des Auslaß- das Einlaßventil betätigt wird. Weiterhin ist es unabhängig davon, ob es bei Otto- oder Dieselmotoren verwendet wird.

Das anhand der Figur 6a beschriebene Verfahren erlaubt bei Otto-Motoren selbst dann ein höheres Schleppmoment als eine konventionelle Ventilsteuerung, wenn das Einlaßventil wie üblich im Ansaugtakt geöffnet wird, da im Saugrohr wegen der geschlossenen Drosselklappe (siehe Figur 4b) ein Unterdruck herrscht. Jede Öffnung des Auslaßventils im Verdichtungstakt bewirkt schon ein erhöhtes Schleppmoment gegenüber der konventionellen Ventilsteuerung.

Die Figur 6b zeigt ein anderes Verfahren, wie bei einer variablen Ventilsteuerung ein erhöhtes Schleppmoment erzeugt werden kann, diesmal durch Kompression. Hier wird im Ansaugtakt das Auslaßventil 604 geöffnet, wodurch Abgas in den Zylinder 601 einströmt. Im Verdichtungstakt werden Ein- und Auslaßventil 603 und 604 geschlossen, wodurch sich im Zylinder 601 ein Überdruck aufbaut, der ein rücktreibendes Drehmoment zur Folge hat. Das Öffnen des Auslaßventils hat gegenüber dem Einlaßventil den Vorteil, daß auf der Auslaßseite ein höherer Druck herrscht als auf der Einlaßseite bei geschlossener Drosselklappe, wodurch der Überdruck im Zylinder höher wird. Auch bei Öffnung des Einlaßventils im Ansaugtakt, wie es bei einer konventionellen Ventilsteuerung geschieht, kann das gewünschte rücktreibende Drehmoment noch erzeugt werden.

Im Arbeits- bzw. Ausstoßtakt werden die Ventile nun auf die gleiche Weise gesteuert. Hierbei ist natürlich darauf zu achten, daß das Auslaßventil erst dann geöffnet wird, wenn es den sich nach unten bewegenden Kolben nicht mehr berühren kann. Zunächst entweicht der Überdruck aus dem Zylinder durch das geöffnete Auslaßventil in den Abgastrakt, wodurch der Kolben bei der Abwärtbewegung kein positives Drehmoment mehr erzeugen kann. Im weiteren Verlauf strömt das Abgas dann durch das Auslaßventil wieder zurück in den Zylinder, um im Ausstoßtakt erneut komprimiert zu werden.

Das anhand der Figur 6b beschriebene Verfahren ist unabhängig von der Zahl der Ein- und Auslaßventile. Weiterhin ist es unabhängig davon, ob es bei Otto- oder Dieselmotoren verwendet wird. Das anhand der Figur 6b gezeigte Verfahren zur Erzeugung eines erhöhten Schleppmoments durch Kompression hat gegenüber dem anhand der Figur 6a beschriebenen Dekompressionsverfahren den Vorteil, daß der Zylinder und der Kolben keinen besonderen Belastungen ausgesetzt sind. Bei dem Dekompressionsverfahren nach Abbildung 6a entsteht jedoch im Zylinder ein weit geringerer Unterdruck als beim gewöhnlichen Betrieb mit einer geschlossenen Drosselklappe, wodurch unter Umständen auftretende Probleme durch Verdampfung des Motoröls oder durch ungewöhnliche Belastung der Kolbenringe zu beachten sind.

Die Figur 6c zeigt eine Kombination aus beiden Verfahren (Figur 6a und Figur 6b), die bei jeder Auf- und Abwärtsbewegung des Kolbens im Zylinder ein rücktreibendes Drehmoment erzeugt. Hier sind im Ansaugtakt Ein- und Auslaßventile geschlossen, der Kolben erzeugt bei der Abwärtsbewegung einen Unterdruck im Zylinder, wodurch ein rücktreibendes Drehmoment entsteht. Kurz vor Erreichen des unteren Totpunktes UT des Kolbens wird das Auslaßventil für eine kurze Zeit geöffnet, wodurch in den Zylinder einströmendes Abgas den Unterdruck ausgleicht. Bei der Aufwärtsbewegung des Kolbens im Verdichtungstakt wird das Abgas komprimiert und erzeugt erneut ein rücktreibendes Drehmoment. Rechtzeitig vor Erreichen des oberen Totpunktes OT wird das Auslaßventil erneut für eine kurze Zeit geöffnet, wodurch der Überdruck entweicht. Hierbei ist natürlich darauf zu achten, daß das Ventil den Kolben nicht berührt, was zu Beschädigungen führen würde. Im Verdichtungs- und Ausstoßtakt wiederholt sich die geschilderte Ventilsteuerung, wodurch erneut in beiden Takten ein rücktreibendes Drehmoment erzeugt wird.

Das anhand der Figur 6c beschriebene Verfahren ist unabhängig von der Zahl der Ein- und Auslaßventile. Weiterhin ist es unabhängig davon, ob es bei Otto- oder Dieselmotoren verwendet wird.

Kann nur eines der Ventile unabhängig von der Position der Nockenwelle frei verstellt werden, sind zusätzliche Mischformen der Betriebsarten aus den Figuren 6a, 6b und 6c möglich.

Die Abbildung 6d zeigt, wie bei einem Otto-Motor mit variabler Ventilsteuerung ein rücktreibendes Drehmoment durch den Druck von Verbrennungsgasen erzeugt werden kann. Hier wird das Einlaßventil konventionell gesteuert, d. h. das Einlaßventil wird nur im Ansaugtakt geöffnet und ansonsten geschlossen gehalten. Das Auslaßventil wird jedoch abweichend von der Steuerung im Normalbetrieb (außerhalb von Schaltvorgängen) angesteuert. Im Ansaugtakt wird dem Zylinder über das Einlaßventil eine bestimmte Menge brennbaren Luft-Kraftstoff-Gemischs zugeführt. Das Auslaßventil ist hierbei geschlossen. Im Verdichtungtakt wird das Gemisch bei geschlossenen Ein- und Einlaßventilen komprimiert und deutlich vor Erreichen des oberen Totpunktes OT des Kolbens durch einen Funken von einer Zündkerze gezündet (extreme Frühzündung). Der Druck der Verbrennungsgase bremst die Aufwärtsbewegung des Kolbens und erzeugt so ein starkes rücktreibendes Drehmoment. Im Arbeitstakt wird dann das Auslaßventil weit vor Erreichen des unteren Totpunktes UT des Kolbens bei weiterhin geschlossenem Einlaßventil geöffnet, wodurch das unter hohem Druck stehende Abgas entweicht und das vortreibende Drehmoment auf die Kurbelwelle stark abnimmt. Im Ausstoßtakt bleibt das Auslaßventil geöffnet, während das Einlaßventil geschlossen bleibt. Nun wird das Abgas aus dem Zylinder ausgeschoben.

In der Summe über zwei Umdrehungen der Kurbelwelle entsteht so ein starkes rücktreibendes Drehmoment.

## Patentansprüche

1. Verfahren zur Beeinflussung des Eingangsmomentes eines einer Brennkraftmaschine nachgelagerten Getriebes während eines Übersetzungsänderungsvorgangs des Getriebes, wobei das Eingangsmoment durch vorgebbare Maßnahmen abhängig von der vorliegenden Schaltart über den am Schaltanfang vorliegenden Wert erhöht oder erniedrigt wird, dadurch gekennzeichnet,
daß als Maßnahme wenigstens eine Betätigung
- einer die geometrischen Eigenschaften des Abgastraktes der Brennkraftmaschine verändernde Vorrichtung und/oder
- einer das Getriebeeingangsmoment beeinflussenden elektromagnetischen Bremse und/oder
- der Zu- oder Abschaltung von durch die Brennkraftmaschine angetriebenen Nebenaggregaten und/oder
- der Ein- oder Auslaßventile der Brennkraftmaschine im Sinne einer Erzeugung eines negativen Verbrennungsmomentes und/oder
- einer Vorverstellung (Frühverstellung) des Zündzeitpunktes im Falle einer fremdgezündeten Brennkraftmaschine
vorgegeben wird.

2. Verfahren nach Anspruch 1, dadurch gekennzeichnet, daß durch die Betätigung der die geometrischen Eigenschaften des Abgastraktes der Brennkraftmaschine verändernde Vorrichtung der durch das Abgas der Brennkraftmaschine bedingte Druck verändert wird.

3. Verfahren nach Anspruch 1 oder 2, dadurch gekennzeichnet, daß als die Vorrichtung, die die geometrischen Eigenschaften des Abgastraktes der Brennkraftmaschine verändert, eine Klappe im Abgastrakt vorgesehen ist.

4. Verfahren nach Anspruch 1, dadurch gekennzeichnet, daß als die elektromagnetische Bremse, die das Getriebeeingangsmoment beeinflußt, eine Wirbelstrombremse vorgesehen ist.

5. Verfahren nach Anspruch 4, dadurch gekennzeichnet, daß die Brennkraftmaschine eine Schwungscheibe aufweist und/oder der Brennkraftmaschine eine Kupplung nachgelagert ist, durch deren Betätigung der Kraftfluß zwischen der Brennkraftmaschine und dem Getriebe beeinflußt wird, und die elektromagnetische Bremse mit der Schwungscheibe der Brennkraftmaschine und/oder mit der Kupplung verbunden ist.

6. Verfahren nach Anspruch 1, dadurch gekennzeichnet, daß als Nebenaggregate ein Generator und/oder ein Kompressor für eine Klimaanlage zu- oder abgeschaltet wird.

7. Verfahren nach Anspruch 1, dadurch gekennzeichnet, daß die Brennkraftmaschine als Viertaktmotor mit einem Ansaugtakt, einem Verdichtungstakt, einem Arbeitstakt und einem Ausstoßtakt ausgelegt ist und als Maßnahme, abweichend von dem Normalbetrieb außerhalb eines Übersetzungsänderungsvorgangs des Getriebes, eine Betätigung der Ein- oder Auslaßventile derart geschieht, daß
- wenigstens ein Auslaßventil während des Verdichtungstaktes geöffnet ist, wobei vorzugsweise das Einlaßventil oder die Einlaßventile während des Ansaugtaktes geschlossen sind, (Abb. 5) und/oder
- wenigstens ein Auslaßventil während des Arbeitstaktes geöffnet ist (Abb. 6) und/oder
- das Auslaßventil oder die Auslaßventile während des Ausstoßtaktes geschlossen sind (Abb. 6) und/oder
- das Einlaßventil oder die Einlaßventile während des Ansaug- und/oder Arbeitstaktes bis kurz vor Erreichen des unteren Totpunktes geschlossen sind und wenigstens ein Auslaßventil kurz vor Erreichen des unteren Totpunktes geöffnet wird, (Abb. 7) und/oder
- das Einlaßventil oder die Einlaßventile während des Verdichtungs- und/oder Ausstoßtaktes bis kurz vor Erreichen des oberen Totpunktes geschlossen sind und wenigstens ein Auslaßventil kurz vor Erreichen des oberen Totpunktes geöffnet wird, (Abb. 7) und/oder
- wenigstens ein Auslaßventil während des Arbeitstaktes geöffnet ist, wobei der während des Verdichtungstaktes stattfindende Zündzeitpunkt im Sinne einer im Vergleich mit dem Normalbetrieb extremen Frühverstellung wesentlich vor Erreichen des oberen Totpunktes eingestellt wird (Abb. 8).

8. Vorrichtung zur Beeinflussung des Eingangsmomentes eines einer Brennkraftmaschine nachgelagerten Getriebes während eines Übersetzungsänderungsvorgangs des Getriebes, wobei Mittel vorgesehen sind, mittels der das Eingangsmoment durch vorgebbare Maßnahmen abhängig von der vorliegenden Schaltart über den am Schaltanfang vorliegenden Wert erhöht oder erniedrigt wird, dadurch gekennzeichnet, daß die Mittel derart ausgestaltet sind, daß als Maßnahmen wenigstens eine Betätigung
- einer die geometrischen Eigenschaften des Abgastraktes der Brennkraftmaschine verändernde Vorrichtung und/oder
- einer das Getriebeeingangsmoment beeinflussenden elektromagnetischen Bremse und/oder
- der Zu- oder Abschaltung von durch die Brennkraftmaschine angetriebenen Nebenaggregaten und/oder
- der Ein- oder Auslaßventile der Brennkraftmaschine im Sinne einer Erzeugung eines negativen Verbrennungsmomentes vorgegeben wird.
